# EUROPEAN PATENT APPLICATION

(11) **EP 4 506 262 A1**
(43) Date of publication of application: **12.02.2025**
(21) Application number: 24187695.2
(22) Date of filing: 10.07.2024
(51) Int. Cl.: B64D 33/08, F01D 25/26, B64D 27/14, B64D 27/10, B64D 33/10

(54) **AIRFRAME ASSEMBLY**

(30) Priority: 10.08.2023 GB 202312225
(71) Applicant: Rolls-Royce plc, London N1 9FX (GB)
(72) Inventor: Newman, Andrew J, Derby, DE24 8BJ (GB); Yeandel, Michael, Derby, DE24 8BJ (GB)
(74) Representative: Rolls-Royce plc

(57) **Abstract**

The present disclosure relates to an airframe assembly 2' comprising an airframe support structure 50 defining an engine void 52 and configured to support a gas turbine engine 10 along an engine axis 9 of the engine void 52; a thermal enclosure 20 configured to surround the gas turbine within the engine void; a heat exchange channel 70 formed between an outer flow-bounding wall of the engine void and an inner wall defined by the thermal enclosure, configured to convey a cooling flow through the engine void outside of the thermal enclosure for the gas turbine engine; and a heat exchanger 76 mounted to the airframe support structure for heat exchange between the cooling flow and a working fluid provided to the heat exchanger.

## Description

### TECHNICAL FIELD

The present disclosure concerns an airframe assembly, including an airframe support structure to support a gas turbine engine.

### BACKGROUND

Airframe architectures of various types are known. In civil aerospace, the most popular airframe architecture is to provide an elongate fuselage with swept wings, and gas turbine engines suspended from the wings by pylons. While less popular to date, civil aerospace airframes are also known or proposed whereby gas turbine engines are integrated in airframe support structures, such as in the wing or in a blended wing-body. Integrated engine architectures are also known in defence aerospace, with one or more gas turbine engines being integrally housed in an airframe structure, which effectively provides a tunnel or engine void for housing the gas turbine engine.

It is known to use a portion of air ingested at an engine intake to provide cooling to one or more systems of a gas turbine engine or aircraft.

### SUMMARY

According to a first aspect of the present disclosure, there is provided an airframe assembly comprising: an airframe support structure defining an engine void and configured to support a gas turbine engine along an engine axis of the engine void; a thermal enclosure configured to surround the gas turbine within the engine void; a heat exchange channel formed between an outer flow-bounding wall of the engine void and an inner wall defined by the thermal enclosure, configured to convey a cooling flow through the engine void outside of the thermal enclosure for the gas turbine engine; a heat exchanger mounted to the airframe support structure for heat exchange between the cooling flow and a working fluid provided to the heat exchanger.

It may be that the flow-bounding wall of the engine void opposes and follows a profile of the thermal enclosure so that in a plane normal to the engine axis, the heat exchange channel has an aspect ratio of at least 3, the aspect ratio being defined as a ratio of a width along the thermal enclosure in the plane, and a height defined as a maximum separation between the thermal enclosure and the outer flow-bounding wall in the plane.

The maximum separation may be defined as the maximum closest distance of separation between the thermal enclosure and the flow-bounding wall in the plane. For any point along each of the thermal enclosure and the flow-bounding wall in the plane, there is a closest distance of separation to an opposing point on the other entity. The maximum separation is the maximum of a set of such closest distances of separation.

It may be that the heat exchange channel has a curved portion bounded by a concave portion of the flow-bounding wall having a concave profile with respect to the heat exchange channel, and an opposing convex portion of the thermal enclosure having a convex profile with respect to the heat exchange channel.

It may be that the heat exchanger is mounted to the airframe support structure to at least partly define the flow-bounding wall of the engine void.

It may be that the heat exchanger is a surface heat exchanger mounted to the airframe support structure so that a bounding surface of the heat exchanger at least partly defines the outer flow-bounding wall of the engine void, wherein a flow path for working fluid through the heat exchanger is outward of the bounding surface.

The expression outward is used with reference to the location of the gas turbine engine or the engine axis of the engine void (along which a gas turbine engine is to be received). The engine or engine axis is at an innermost location and other components described herein are generally outward of the engine or engine axis. For example, in sequence, the thermal enclosure is outward of the engine or engine axis, the heat exchange channel is outward of the thermal enclosure, and the airframe support structure is outward of the thermal enclosure. A surface heat exchanger as described herein may define a bounding surface that defines an outer flow-bounding wall of the engine void and therefore an outer wall of the heat exchange channel. As such, other components of the surface heat exchanger may be located outward of the bounding surface, including a flow path for the working fluid. Heat exchange fins of the surface heat exchanger may extend inwardly from the bounding surface. A surface heat exchanger may differ from other types of heat exchanger in that the flows (e.g., the cooling flow and the flow of working fluid) do not extend across the bounding surface (e.g., a single bounding surface) of the heat exchanger. While other types of heat exchangers may keep the two fluids separate, this is typically done with a plurality of interleaved channels or layers, so there is no single bounding surface.

It may be that the bounding surface of the heat exchanger opposes and follows a profile of the thermal enclosure.

It may be that the surface heat exchanger comprises heat transfer fins extending inwardly from the bounding surface into the heat exchange channel.

It may be that the heat transfer fins extend towards the thermal enclosure across no more than 80% of a local height of the heat exchange channel, for example no more than 60% or no more than 50% of a local height of the heat exchange channel.

It may be that the heat exchange channel has an angular extent about the engine axis of at least 45°, for example at least 60°, at least 90°, at least 120° or at least 150°. The angular extent may be at least 180°. The angular extent may be 360°.

It may be that the heat exchanger comprises a plurality of heat exchangers mounted along an axial extent of the engine void.

It may be that the airframe support structure comprises one or more structural ribs interposed between respective axially-adjacent heat exchangers of the plurality of heat exchangers.

It may be that the airframe support structure comprises an intake for receiving intake air, wherein the airframe support structure is configured to direct the intake air only to the gas turbine engine and to the heat exchange channel, whereby the airframe support structure is free of cut-outs for channels to direct the intake air outward of the engine void.

It may be that the airframe assembly has an upward direction corresponding to a ground idle configuration of the airframe, the engine void having an upper half and a lower half with respect to the upward direction, wherein the heat exchange channel is provided in the upper half of the engine void, and wherein the airframe assembly comprises one or more access routes for gas turbine engine maintenance via the lower half.

It may be that airframe support structure defines two engine voids each configured to support a respective gas turbine engine along a respective engine axis; wherein for each engine void the airframe assembly comprises a thermal enclosure, heat exchange channel and heat exchanger in accordance with any one of the preceding claims.

It may be that an airframe assembly according to the first aspect comprises a gas turbine engine received in the or each engine void.

According to a second aspect of the present disclosure, there is provided an aircraft comprising an airframe assembly in accordance with the first aspect.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only with reference to the accompanying drawings, which are purely schematic and not to scale, and in which:
**Figure 1** shows a highly schematic cross-sectional view of a gas turbine engine provided within an airframe support structure;
**Figure 2** schematically shows a cross-sectional view (normal to an engine axis) of an airframe assembly including twin gas turbine engines provided in an airframe support structure, each associated with dedicated heat exchange channel;
**Figure 3** schematically shows a cross-sectional view (including a plane that includes the engine axis) of the airframe assembly of Figure 2;
**Figure 4** schematically shows a cross-sectional view (normal to an engine axis) of an airframe assembly including twin gas turbine engines provided in an airframe support structure, each provided with an integrated heat exchange channel;
**Figure 5** schematically shows a cross-sectional view (in a plane including an engine axis) of the airframe assembly of Figure 4; and
**Figure 6** schematically shows a cross-sectional view (in a plane normal to the engine axis) of the airframe assembly of Figure 5.

### DETAILED DESCRIPTION

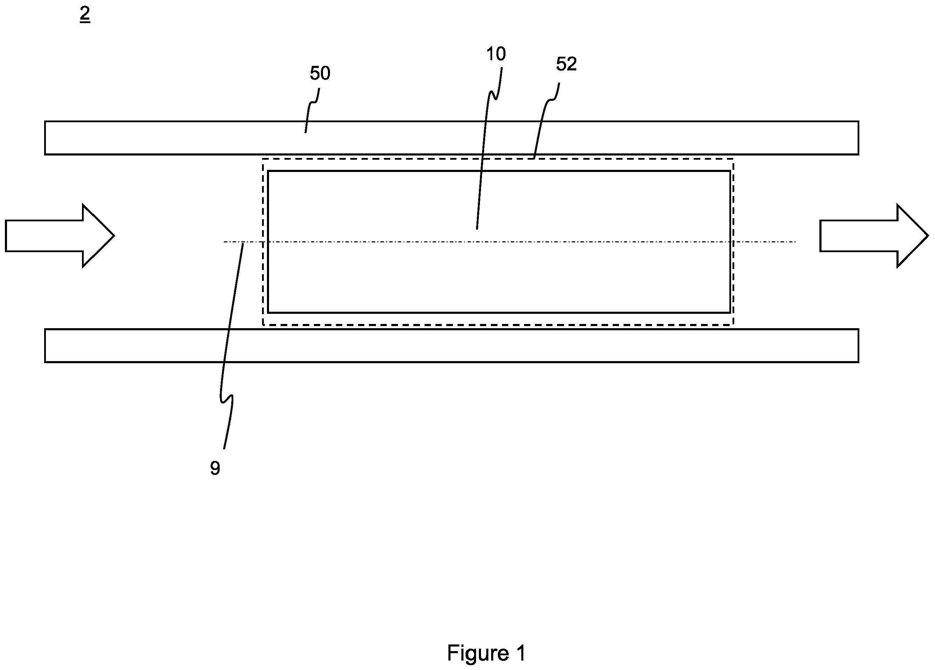

Figure 1 is a highly schematic view of an airframe assembly 2 comprising an airframe support structure 50 defining an engine void 52, and a gas turbine engine 10 provided in the engine void. The engine void 52 is provided along (e.g., may define) an engine axis 9, such that when the gas turbine engine 10 is installed in the engine void, a principal rotational axis of the gas turbine 10 aligns with the engine axis. Figure 1 shows a flow direction through the airframe assembly 2 from an intake upstream of the gas turbine engine 10 (to the left of the gas turbine engine in the drawing) to an exhaust downstream of the gas turbine engine (to the right of the gas turbine engine in the drawing).

The engine may comprise a propulsive fan that generates two airflows: a core airflow and optionally a bypass airflow. The gas turbine engine may comprise a core that receives the core airflow. The engine core may comprise, in axial flow series, a low-pressure compressor, a high-pressure compressor, combustion equipment, a high-pressure turbine, a low-pressure turbine and a core exhaust nozzle. The fan may be attached to and driven by the low-pressure turbine via a shaft (and optionally by an epicyclic gearbox).

In use, the core airflow is accelerated and compressed by the low-pressure compressor and directed into the high-pressure compressor where further compression takes place. The compressed air exhausted from the high-pressure compressor is directed into the combustion equipment where it is mixed with fuel and the mixture is combusted. The resultant hot combustion products then expand through, and thereby drive, the high pressure and low-pressure turbines before being exhausted through the nozzle to provide some propulsive thrust. The high-pressure turbine drives the high pressure compressor by a suitable interconnecting shaft. The fan may provide the majority of the propulsive thrust. When provided, the epicyclic gearbox may be a reduction gearbox.

Other gas turbine engines to which the present disclosure may be applied may have alternative configurations. For example, such engines may have an alternative number of compressors and/or turbines and/or an alternative number of interconnecting shafts.

The geometry of the gas turbine engine 10, and components thereof, is defined by a conventional axis system, comprising an axial direction (which is aligned with the engine axis 9 and principal rotational axis), a radial direction (in the bottom-to-top direction in Figure 1), and a circumferential direction (perpendicular to the page in the Figure 1 view). The axial, radial and circumferential directions are mutually perpendicular.

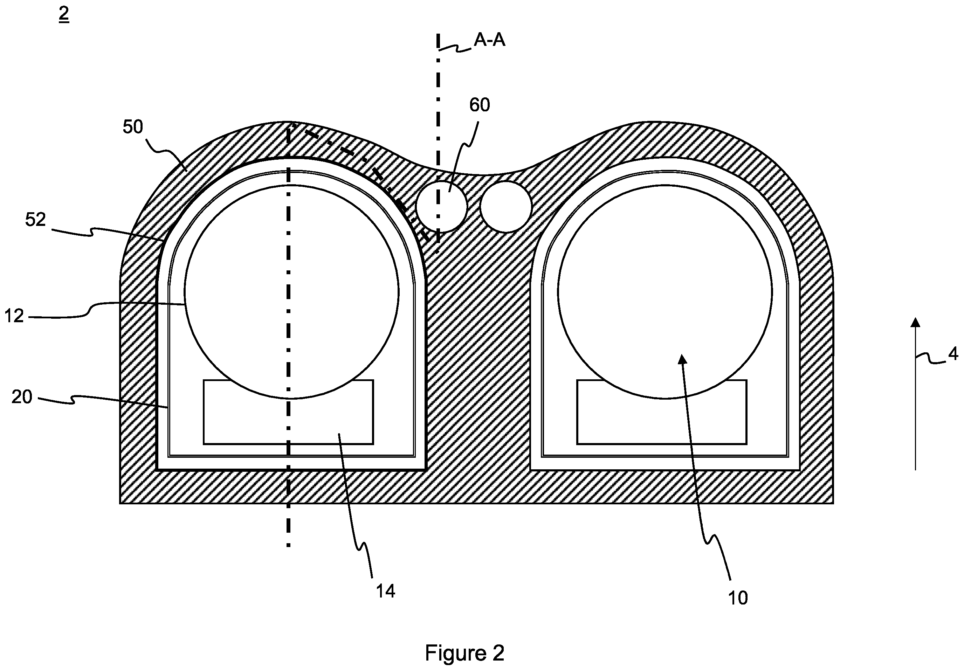

**Figure 2** schematically shows a cross-sectional view of an airframe assembly 2 normal to an engine axis 9. The airframe assembly 2 may be as described above with reference to Figure 1, comprising two gas turbine engines and associated engine voids 52. It will be appreciated that the airframe assembly 2 as shown may represent a portion of a larger airframe assembly for an aircraft.

The airframe assembly 2 comprises an airframe support structure 50, which in this example has a shape defined to envelope the two gas turbine engines 10 which are in a side-by-side relationship. In this particular example, the airframe assembly 2 is shown in a ground idle orientation (i.e., an orientation corresponding to the associated aircraft being static on the ground for subsequent flight), with an upward direction 4 shown by the arrow to the right of the drawing. In this example, each gas turbine engine 10 has a generally circular body 12 (in cross-section), but also comprises one or more components extending outside of this generally circular profile, including an auxiliary component 14 which depends from the body 12 as shown in Figure 2. The auxiliary component 14 may be an auxiliary gearbox, for example.

Each gas turbine engine 10 is provided with a thermal enclosure 20. In this example the thermal enclosure provides a continuous enclosure around the gas turbine engine (e.g., to form a closed loop around the gas turbine engine in cross-section), but in other examples the thermal enclosure may partially surround the gas turbine engine (e.g., over a limited angular extent around the gas turbine engine, with reference to the engine axis). In the example of Figure 2, the thermal enclosure 20 (in cross-section) has a semi-circular upper portion corresponding to the profile of the body 12 of the gas turbine engine 10, and a rectilinear lower portion to accommodate the auxiliary component 14. In other examples, the thermal enclosure 20 may have any suitable shape which may correspond to the profile of the gas turbine engine, and which may vary along an axial extent of the gas turbine engine.

The thermal enclosure 20 is provided as a thermal shield to protect the airframe support structure from heat from the gas turbine engine (e.g., radiant heat). The thermal enclosure 20 may be provided as sheet or membrane structure around the gas turbine engine, for example sheet titanium (or titanium alloy). The thermal enclosure may be relatively thin as compared with members of the airframe support structure. For example, the thermal enclosure may have a thickness of 0.5-3mm, for example 1-2mm. The thermal enclosure 20 may be provided with a thermal coating on inner and/or outer sides, such as a ceramic paint.

The thermal enclosure 20 is configured to bound any and all propulsive air flow associated with the respective gas turbine engine, which would include the core flow and any bypass flow.

As shown in Figure 2, in this example the engine void 52 is defined to have a profile that corresponds to (e.g. follows) the profile of the thermal enclosure 20. This may reflect advantages in structural design and performance that may arise when the engine void is kept to a minimum necessary to house the engine. As such, there may be a relatively small clearance between the thermal enclosure and a wall of the engine void 52. The example airframe support structure 50 is illustrated as comprising a wall of relatively constant thickness, such that the outer profile of the airframe support structure also corresponds to the profile of the thermal enclosure 20 and engine void 52, with a septum wall of the airframe support structure 50 separating the two side-by-side engine voids 2. However, in other examples, the airframe support structure can have any suitable shape and the outer profile may not correspond to the profile of the engine voids 52. Further, while schematically illustrated as a unitary support body, it will be appreciated that the airframe support structure may not be a unitary or solid component, and may be formed by a plurality of connected frameworks or structural members.

Although not shown, the gas turbine engine may be mounted within the engine void 52 by structural mounts extending between the airframe support structure and the gas turbine engine. The thermal enclosure may be mounted on the gas turbine engine, or may be mounted to the airframe support structure (e.g., by the same or dedicated mounts).

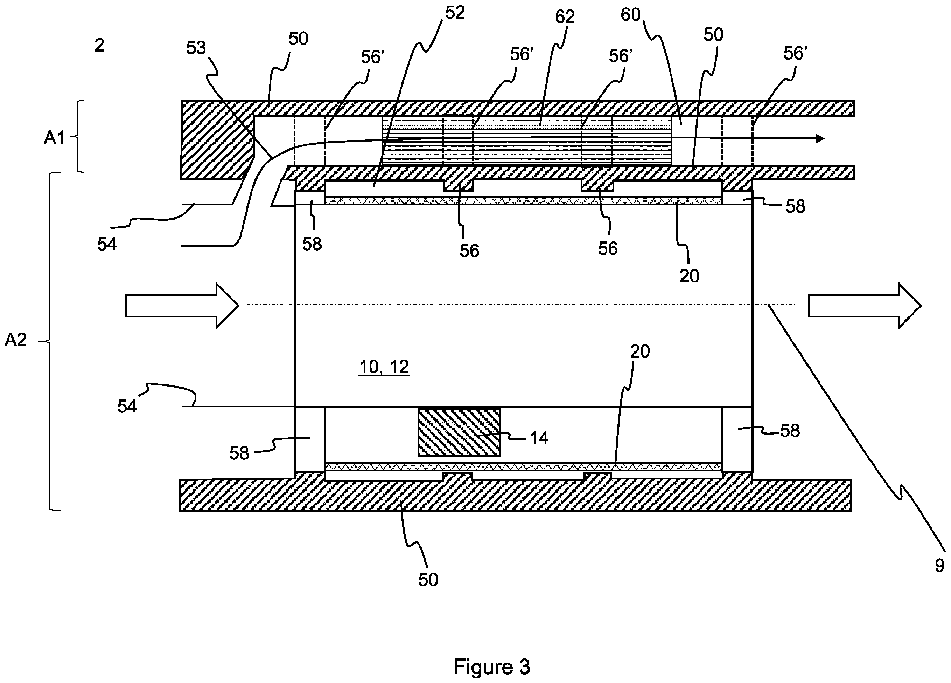

The example of Figure 2 relates to a previously-considered arrangement which falls outside of the scope of the attached claims by virtue of the arrangement of a heat exchange channel. In addition to the two engine voids 52, the airframe support structure 50 of this previously-considered example also includes two heat exchange channels 60 which are separate from the voids, and which extend along a similar axial extent from an intake to an exhaust of the airframe assembly (as will be further described below with reference to Figure 3). The inventors consider that the provision of these two heat exchange channels 60 to present a challenge in the structural design and performance of the airframe support structure 50, and may lead to excess weight in the airframe support structure 50 to accommodate them. Figure 2 shows a non-linear cross-sectional path A-A through the airframe assembly 2, with a corresponding cross-sectional view shown in Figure 3 and described below. As shown, the cross-sectional path extends along the upward direction through a centre of the engine void (e.g., intersecting the engine axis) and associated parts of the airframe support structure 20, and then deviates to a laterally-offset line that extends through the adjacent heat exchange channel 60.

Figure 3 shows a cross-sectional view of the airframe assembly 2 of Figure 2 along the cross-sectional path A-A, with the upper part A1 of the cross-sectional view corresponding to the plane intersecting the heat exchange channel 60, and a lower part A2 corresponding to the plane intersecting the engine axis 9. This view shows an intake 54 upstream of the gas turbine engine, and an auxiliary path 53 that extends from the intake 54 to the heat exchange channel 60, thereby providing a portion of intake air received at the intake 54 to the heat exchange channel 60, rather than to the gas turbine engine 10. As shown in Figure 3, a portion of the airframe support structure 50 serves as an intervening wall between the engine void 52 and the heat exchange channel 60. The provision of two elongate channels through the airframe support structure 50 per gas turbine engine (i.e., the engine void 52 and the heat exchange channel 60) is considered to complicate and reduce structural performance, and may result in additional weight of the airframe support structure to provide sufficient structural performance as noted above.

Figure 3 features relating to the engine void 52 in further detail. The airframe support structure 50 which defines the void 52 has a plurality of circumferentially extending ribs 56 distributed along an axial extent of the engine void. The dashed lines indicated at 56' show locations where a portion of the airframe support structure (e.g., a structural support member) may advantageously extend for load transfer with the ribs 56, but is prevented owing to the provision of the heat exchange channel 60.

Figure 3 shows, within the engine void 52, the thermal enclosure 20 as described above. In this example, the thermal enclosure 20 is spaced apart from the wall of the airframe support structure defining the engine void 52 by a clearance. Bulkheads 58 are provided at upstream and downstream ends of the engine void 52 to prevent flow around the thermal enclosure. In this example, the bulkheads 58 do not provide a mount for the gas turbine engine of thermal enclosure, which may be provided by separate mounts as described above.

Figure 3 also shows a heat exchanger 62 disposed within the heat exchange channel, for heat exchange with a cooling flow received from the intake 54 (i.e., external air drawn into the intake). In particular, the heat exchanger 62 is configured for heat exchange between the cooling flow and a working fluid provided to the heat exchanger, for heat rejection to the cooling flow. The working fluid may form part of a coolant circuit, such as a vapour compression circuit (also known as a refrigerant circuit). A coolant circuit may be provided to facilitate heat rejection from one or more components of the airframe, such as an electronics system (e.g., a power electronics system), a battery, oil system, lubricant system, or a gas turbine engine. As shown in Figure 3, the heat exchanger 62 may extend into and/or occupy a cross-sectional profile of the heat exchange channel. The heat exchanger 62 may be in the form of a matrix heat exchanger, which defines separate flow channels for the cooling flow and working fluid within the heat exchange channel 60. The heat exchanger may, for example, comprise a series of plates and fins defining such channels, and/or the working fluid may extend through the heat exchanger in a network of tubes coupled to heat exchange elements such as fins.

In use, intake air is received at the intake 52 with a major portion of the intake air flowing through the gas turbine engine for propulsion, and a minor portion of the intake air being diverted along the auxiliary path 53 through the heat exchange channel, to serve as a cooling flow for the heat exchanger 62 as described above. Heat is rejected from the working fluid of the heat exchanger 62 to the cooling flow.

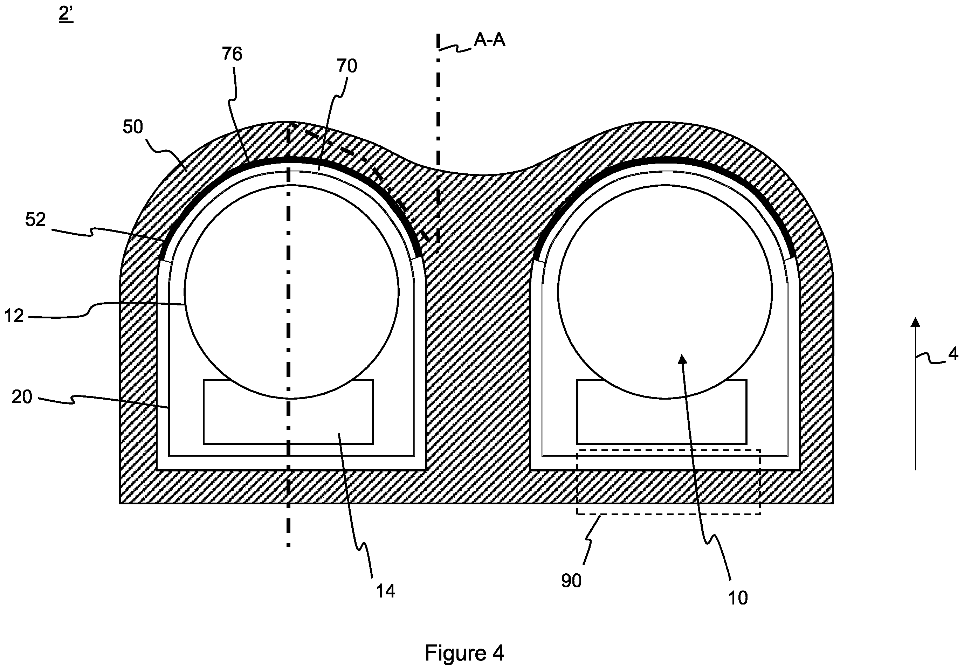

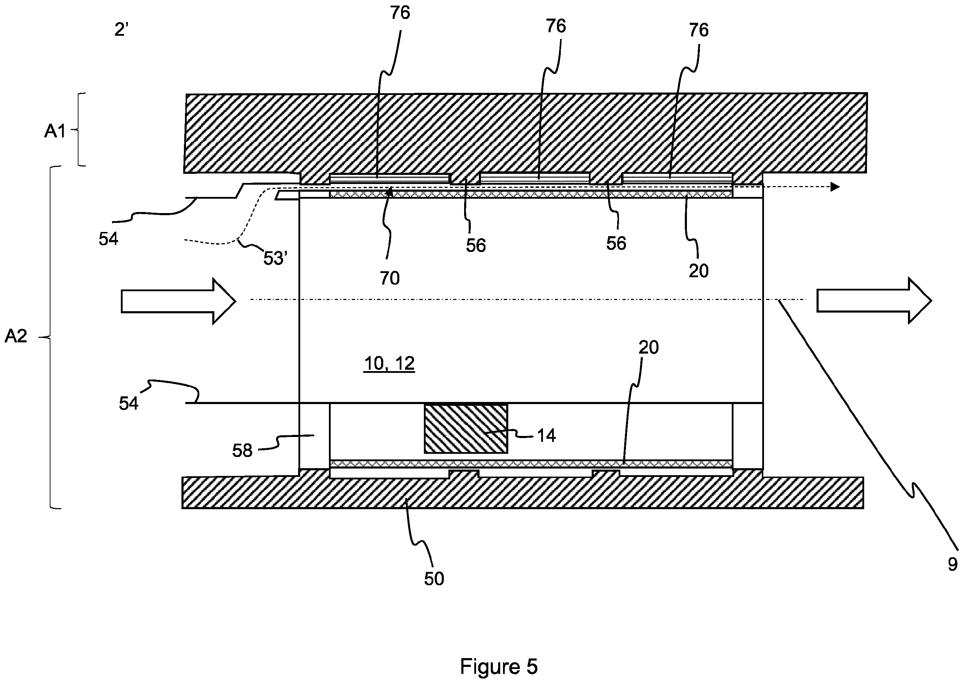

Figures 4 and 5 show cross-sectional views of an airframe assembly 2' which is similar to that described above with respect to Figures 2 and 3, but differs in aspects relating to the cooling flow and heat exchange. Like reference numerals are used for like parts, with the corresponding description above applying equally to the example airframe assembly 2' of Figures 4 and 5.

As shown in Figure 4, the airframe assembly 2' has two gas turbine engines 10 provided within thermal enclosures 50 which are themselves within engine voids 52 of an airframe support structure 50. The airframe support structure 50, engine voids 52, thermal enclosure 20 and gas turbine engines 10 have the same features and configuration as described above with respect to the example of Figures 2 and 3, except that the airframe support structure does not include dedicated heat exchange channels 60, with equivalent functionally instead being provided by a heat exchanger disposed within each engine void 52 outside of the thermal enclosure 20.

As shown in Figures 4 and 5, a heat exchange channel 70 is provided within the engine void 52, outside of the thermal enclosure 20. The heat exchange channel is formed between an outer flow-bounding wall of the engine void 52, and an inner wall defined by the thermal enclosure. The heat exchange channel has a relatively shallow profile, following the profile of the engine void 52 and the thermal enclosure. In the example illustrated in Figure 4, the heat exchange channel has a generally arcuate form, corresponding to curved portions of the engine void 52 and the thermal enclosure 20.

The outer flow-bounding wall of the engine void 52 may be wall defined by the airframe support structure, or a wall defined within the engine void 52 but which is configured to serve as an outer boundary for flow through the engine void (also known as a gas-washed surface or wall). In this example, the outer flow-bounding wall of the engine void is at least party defined by a heat exchanger 76 mounted to the airframe support structure 50. As shown in Figures 4 and 5, the heat exchanger 76 is mounted on the airframe support structure 50 within the engine void, and defines a surface (the outer flow-bounding wall) which opposes the thermal enclosure 20 and defines a heat exchange channel 70 therebetween.

As best shown in Figure 5, there is a plurality of such heat exchangers 76 (three shown) at axially spaced locations along the engine void 52, with ribs 56 of the airframe support structure extending therebetween. This demonstrates how the heat exchangers 76 can be designed to utilise the available space between such ribs, and provide the necessary heat transfer function with limited space available within the engine void 52. The heat exchangers 76 may be connected in any suitable arrangement (e.g., in series or in parallel, with respect to the working fluid).

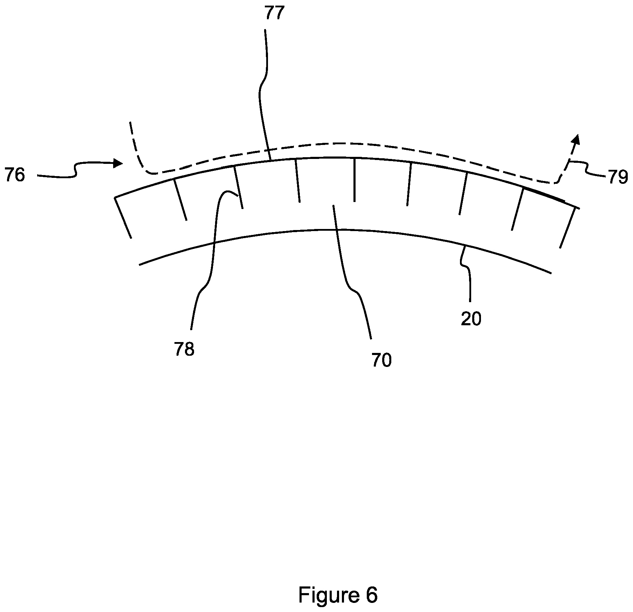

The heat exchanger 76 may be a surface heat exchanger (also known as a surface type heat exchanger). A surface heat exchanger as described herein may define a bounding surface that defines an outer flow-bounding wall of the engine void and therefore an outer wall of the heat exchange channel. As such, other components of the surface heat exchanger may be located outward of the bounding surface, including a flow path for the working fluid. Heat exchange fins of the surface heat exchanger may extend inwardly from the bounding surface. A surface heat exchanger may differ from other types of heat exchanger in that the flows (e.g., the cooling flow and the flow of working fluid) do not extend across the bounding surface (e.g., a single bounding surface) of the heat exchanger. While other types of heat exchangers may keep the two fluids separate, this is typically done with a plurality of interleaved channels or layers, so there is no single bounding surface. This is schematically and by way of example in **Figure 6****,** which shows a cross-sectional view of an arcuate section of the heat exchange channel 70, as bounded by a curved portion of the thermal enclosure 20 on an inner side (an inner convex wall, with respect to the heat exchange channel), and by a bounding surface 77 of the heat exchanger 76, which has a corresponding curved portion that follows the profile of the thermal enclosure 20. For illustrative purposes, a flow path 79 for a working fluid of the heat exchanger 76 is shown using a dashed arrow, and is wholly located outwardly of the bounding surface 77. As shown, a number of heat transfer elements 78, in particular heat transfer fins 78 extend inwardly from the bounding surface 77. The heat transfer fins 78 extend into the heat exchange channel, but in this example do not engage the opposing thermal enclosure 20. For example, the heat transfer fins may extend towards the thermal enclosure across no more than 80% of a local height of the heat exchange channel, for example no more than 60% or no more than 50% of a local height of the heat exchange channel. The local height may be defined as the local closest distance of separation from a root of the fin on the bounding surface 77 separation to an opposing point on the thermal enclosure 20.

In use, heat from a working fluid provided to the heat exchanger 76 is transferred to the cooling flow, in particular via the bounding surface 77 and the heat transfer fins 78. A disadvantage of surface type heat exchangers with fins is that a boundary layer flow between the fins tends to build to reach the height of the fins, such that a flow provide to flow past the heat exchanger tends to be biased to flow outside of the spaces between the fins, reducing the amount of flow passing between the fins for heat transfer. An advantage of the arrangement shown in the example airframe assembly 2' of Figures 4 to 6 is that the heat exchanger 76 opposes the thermal enclosure, which thereby serves as an opposing bounding wall for the flow. This limits the extent to which such a boundary layer can become established and bias the flow to a region outside of the fins. Instead, more of the flow may be driven to flow between the fins for efficient heat transfer with the heat exchanger 76.

By comparing the two example flow assemblies 2, 2' of Figures 2-3 and 4-6 respectively, it can be observed that the flow assembly 2' of Figures 4-6 effectively replaces the dedicated circular cross-section heat exchange channel 60 (of the first example) with a shallow-profile heat exchange channel 70 that has a wider circumferential extent around the thermal enclosure that offsets a low channel height. The heat exchange channel 70 may be defined as having a large aspect ratio. More particularly, n a plane normal to the engine axis, the heat exchange channel 70 may have an aspect ratio of at least 3, when defined as a ratio of a width along the thermal enclosure in the plane, and a height defined as a maximum separation between the thermal enclosure and the outer flow-bounding wall in the plane. The maximum separation may be defined as the maximum closest distance of separation between the thermal enclosure 20 and the flow-bounding wall in the plane. For any point along each of the thermal enclosure and the flow-bounding wall in the plane, there is a closest distance of separation to an opposing point on the other entity. The maximum separation is the maximum of a set of such closest distances of separation.

Heat transfer fins as described herein are not considered to define a boundary of a heat exchange channel for the purposes of assessing its aspect ratio as defined herein (such a boundary may only be defined by the airframe support structure extending through the channel from one side to the other).

Another way of expressing a characteristic of the shallow profile heat exchange channel is by reference to its angular extent about the engine axis. A reference to an angular extent of an element does not necessarily indicate that the element is defined as an arc of constant radius with respect to the engine axis, but is merely used to make use of the polar frame of reference with respect to the engine axis, as a relatively large angular extent can reflect that the heat exchange channel is provided over a relatively large span to compensate for a relatively low height. For example, the heat exchange channel may have an angular extent about the engine axis of at least 45°, for example at least 60°, at least 90°, at least 120° or at least 150°. The angular extent may be at least 180°. The angular extent may be 360°.

While an engine void and thermal enclosure may take any suitable shape as disclosed above, and while a heat exchange channel may be disposed between them at any point around the gas turbine engine, the above example shows the heat exchange channel disposed at an upper portion (e.g., within an upper half of the engine void, with respect to the upward direction defined elsewhere herein). In some airframes, a particular location for the heat exchange channel may be advantageous. This may depend on the location of other equipment and the shape, structural and/or functional demands of the airframe support structure. In the present disclosure, it is envisaged that the portion of the airframe support structure housing the engine (i.e., defining the engine void) may be located towards a central body of an airframe. This is an example of a location where there may be no or few systems disposed below the engine void, but there may be at least one airframe system above the engine void (such as a hydraulic systems, electric systems or a cabin space). Accordingly, it may be that the airframe support structure comprises one or more access routes for gas turbine engine maintenance via the lower half of the engine void, as schematically shown in Figure 4 by the access route 90. The access route 90 may comprises one or more removable or hinged panels in the respective structures (e.g., in the airframe support structure and thermal enclosure, when provided at that location).

Various examples have been described, each of which feature various combinations of features. It will be appreciated by those skilled in the art that, except where clearly mutually exclusive, any of the features may be employed separately or in combination with any other features and the invention extends to and includes all combinations and subcombinations of one or more features described herein.

It will also be appreciated that whilst the invention has been described with reference to aircraft and aircraft propulsion systems, the electric machine drive techniques described herein could be used for many other applications. These include, but are not limited to, automotive, marine, and land-based applications.

## Claims

1. An airframe assembly comprising:
an airframe support structure defining an engine void and configured to support a gas turbine engine along an engine axis of the engine void;
a thermal enclosure configured to surround the gas turbine within the engine void;
a heat exchange channel formed between an outer flow-bounding wall of the engine void and
an inner wall defined by the thermal enclosure, configured to convey a cooling flow through the engine void outside of the thermal enclosure for the gas turbine engine;
a heat exchanger mounted to the airframe support structure for heat exchange between the cooling flow and a working fluid provided to the heat exchanger.

2. The airframe assembly according to Claim 1, wherein the flow-bounding wall of the engine void opposes and follows a profile of the thermal enclosure so that in a plane normal to the engine axis, the heat exchange channel has an aspect ratio of at least 3, the aspect ratio being defined as a ratio of a width along the thermal enclosure in the plane, and a height defined as a maximum separation between the thermal enclosure and the outer flow-bounding wall in the plane.

3. The airframe assembly according to Claim 1 or Claim 2, wherein the heat exchange channel has a curved portion bounded by a concave portion of the flow-bounding wall having a concave profile with respect to the heat exchange channel, and an opposing convex portion of the thermal enclosure having a convex profile with respect to the heat exchange channel.

4. The airframe assembly according to any one of the preceding claims, wherein the heat exchanger is mounted to the airframe support structure to at least partly define the flow-bounding wall of the engine void.

5. The airframe assembly according to any one of the preceding claims, wherein the heat exchanger is a surface heat exchanger mounted to the airframe support structure so that a bounding surface of the heat exchanger at least partly defines the outer flow-bounding wall of the engine void, wherein a flow path for working fluid through the heat exchanger is outward of the bounding surface.

6. The airframe assembly according to Claim 5, wherein the bounding surface of the heat exchanger opposes and follows a profile of the thermal enclosure.

7. The airframe assembly according to Claim 6, wherein the surface heat exchanger comprises heat transfer fins extending inwardly from the bounding surface into the heat exchange channel.

8. The airframe assembly according to Claim 7, wherein the heat transfer fins extend towards the thermal enclosure across no more than 80% of a local height of the heat exchange channel, for example no more than 60% or no more than 50% of a local height of the heat exchange channel.

9. The airframe assembly according to any one of the preceding claims, wherein the heat exchange channel has an angular extent about the engine axis of at least 45°, for example at least 60°, at least 90°, at least 120° or at least 150°.

10. The airframe assembly according to any one of the preceding claims, wherein the heat exchanger comprises a plurality of heat exchangers mounted along an axial extent of the engine void.

11. The airframe assembly according to Claim 10, wherein the airframe support structure comprises one or more structural ribs interposed between respective axially-adjacent heat exchangers of the plurality of heat exchangers.

12. The airframe assembly according to any one of the preceding claims, wherein the airframe support structure comprises an intake for receiving intake air, wherein the airframe support structure is configured to direct the intake air only to the gas turbine engine and to the heat exchange channel, whereby the airframe support structure is free of cut-outs for channels to direct the intake air outward of the engine void.

13. The airframe assembly according to any one of the preceding claims, wherein the airframe support structure defines two engine voids each configured to support a respective gas turbine engine along a respective engine axis; wherein for each engine void the airframe assembly comprises a thermal enclosure, heat exchange channel and heat exchanger in accordance with any one of the preceding claims.

14. The airframe assembly according to any one of the preceding claims, comprising a gas turbine engine received in the or each engine void.

15. An aircraft comprising the airframe assembly of any one of the preceding claims.
